# EUROPEAN PATENT APPLICATION

(11) **EP 2 549 200 A1**
(43) Date of publication of application: **23.01.2013**
(21) Application number: 12186230.4
(22) Date of filing: 16.09.2010
(51) Int. Cl.: F24J 2/46, F24J 2/34, F24J 2/38, F24J 2/54, F24J 2/52, C02F 1/14

(54) **Solar energy conversion system**

(30) Priority: 16.09.2009 US 243032 P; 16.02.2010 US 304824 P
(62) Divisional of application: 10757372.7
(71) Applicant: 101 Celsius, LLC, Chicago, Illinois 60657 (US)
(72) Inventor: Funcheon, David, Chicago, IL Illinois 60657 (US)
(74) Representative: Grund, Martin

(57) **Abstract**

A portable solar collector module (710) includes a solar collector (712) and a protective cover (714). The inner surface of the protective cover (714) includes a reflective surface (716) which reflects solar energy onto the solar collector (712) when the collector module (710) is in a deployed state. The collector module (710) alo includes a plane angle modifier (718) which adjusts the angle of the solar collector (712) relative to the solar elevation. A solar energy conversion system includes a solar collector and a water purification circuit (217). The energy conversion system may also provide electrical power by means of a turbine (260) in fluid communication with the working fluid of the solar collector (212). The solar collector may be a composite of a concentrated solar power (CSP) parabolic trough collector, a compound parabolic concentrators (CPC) evacuated tube collector and a photovoltaic collector.

## Description

### CROSS REFERENCE TO RELATED APPLICATIONS

The present patent application claims priority to U.S. Provisional Patent Application Ser. No. 61/243,032 filed on September 16, 2009, and to U.S. Provisional Patent Application Ser. No. 61/304,824 filed on February 16, 2010 which are fully incorporated by reference herein.

### BACKGROUND AND SUMMARY

The present disclosure is related to solar energy conversion devices. In particular, the present disclosure relates to a solar collector configured to absorb radiant solar energy and to convert the radiant solar energy for useful purposes, such as water purification.

One aspect of the present disclosure is a solar energy conversion system including a solar collector and a water purification circuit. A working fluid in the solar collector is passed through a heat exchanger for purifying non-potable water to produce potable water and/or distilled water. The system may also include a turbine and generator for producing electricity. Further, the system may include a plane angle modifier for automatically orienting a solar collector to maximize absorption of radiant solar energy. Also, a case for transporting a solar energy conversion system of the present disclosure and its associated components may be included.

Another aspect of the present disclosure is a self-contained mobile solar thermal energy conversion system including a solar collector having a working fluid, a heat exchanger, and an integral water tank configured to contain a supply of non-potable water, housed within a self-contained portable case. Solar thermal energy is absorbed by the working fluid of the solar collector and then transferred from the working fluid to the non-potable water within the water tank by the heat exchanger. The temperature of the non-potable water is sufficiently raised to kill any pathogens, thus providing a source of potable water.

Another aspect of the present disclosure is a solar energy conversion system including a portable collector module, which includes a solar collector, a protective cover, and a plane angle modifier. The protective cover may include a reflective surface configured to reflect solar radiation at the solar collector. The protective cover may be positioned at an angle between about 45 degrees and about 120 degrees relative to the solar collector. The protective cover may also include a thin film photovoltaic panel.

### BRIEF DESCRIPTION OF THE DRAWINGS

The present disclosure will be described hereafter with reference to the attached drawings which are given as a non-limiting example only, in which:

FIG. 1 is a schematic representation of a first embodiment of the solar energy conversion system of the present disclosure;

FIG. 2 is a schematic representation of a second embodiment of the solar energy conversion system of the present disclosure;

FIG. 3 is a schematic representation of third embodiment of the solar energy conversion system of the present disclosure;

FIG. 4 is a perspective view of a tracking assembly for the solar energy conversion system of the present disclosure;

FIG. 5 is a perspective view of a tracking base for the solar energy conversion system of the present disclosure;

FIG. 6 is a cut-away perspective view of a case configured for an evacuated tube solar collector;

FIG. 7 is a perspective view of a case assembly for transporting the solar energy conversion system of the present disclosure; and

FIG. 8 is a perspective view showing a case assembly showing the individual case units for the various components.

FIG. 9 is a perspective view of an embodiment of the solar thermal energy conversion system of the present disclosure;

FIG. 10 is a perspective view of another embodiment of the solar thermal energy conversion system of the present disclosure with the solar collectors removed from the mounting brackets;

FIG. 11A and FIG. 11B are top and side (respectively) schematic representations of an embodiment of the thermal energy conversion system of the present disclosure.

FIG. 12 is a perspective view of another embodiment of the solar thermal energy conversion system of the present disclosure including external storage, pumping, and control stations;

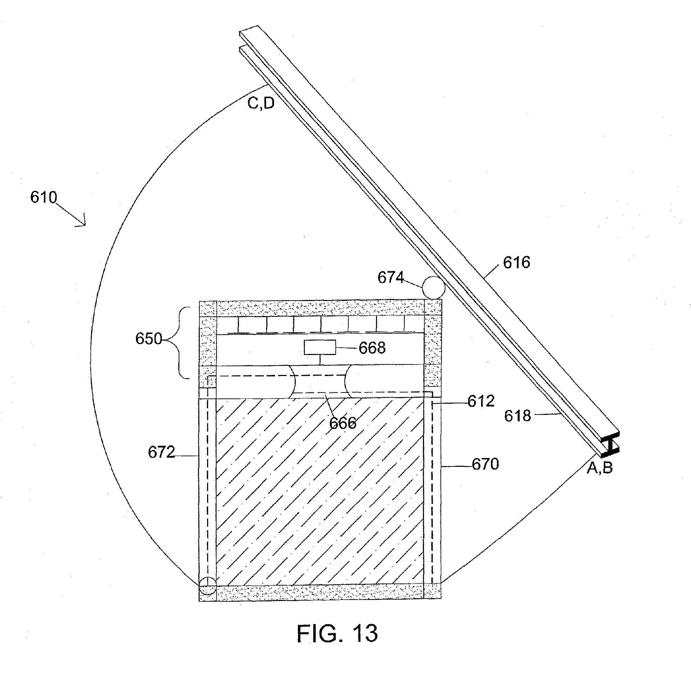

FIG. 13 is an end view of an embodiment of the including an adjustable solar collector;

FIG. 14 is a perspective view of an embodiment of an adjustable portable solar collector including a reflector;

FIGS. 15-17 are schematic representations of the gains in energy transfer for a solar collector including a reflector and angle modification over a fixed solar collector; and

FIGS. 18 and 19 are schematic representations of exemplary applications of the solar energy conversion system of the present disclosure.

### DETAILED DESCRIPTION

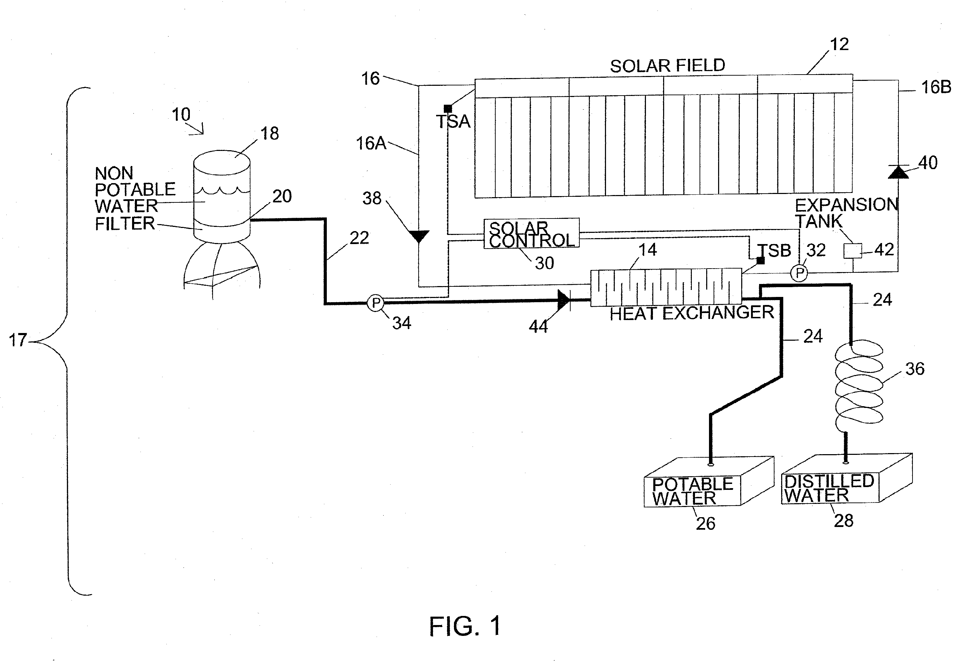

The solar energy conversion system 10 includes a solar collector 12 or solar field, and a heat exchanger 14. Referring to FIG. 1, solar collector 12 including and heat exchanger 14 are fluidly coupled by a circulation line 16 having a hot leg 16A for transporting a working fluid from solar collector 12 to heat exchanger 14, and a cold leg 16B for returning the working fluid after it has passed through heat exchanger 14. Solar collector 12 of the present disclosure may consist of evacuated tubes with compound parabolic concentrators (CPC evacuated tubes), photovoltaic (PV) cells, and/or concentrated solar power (CSP) parabolic trough collectors. In the exemplary embodiment of FIG. 1, CPC evacuated tubes are shown.

In the embodiment of the solar energy conversion system 10 shown in FIG. 1, solar energy is used to convert non-potable water into potable water, distilled water, or both by means of a purification circuit 17. Purification circuit 17 includes a tank 18 for holding a source of non-potable water. Tank 18 may include a filter 20, for removing particulates, organic compounds, and other contaminants from the non-potable water. Such filters may include sand filters, paper or fiber filters, charcoal filters, etc. Non-potable water is supplied to heat exchanger 14 through supply line 22. Water discharged from heat exchanger 14, which may be in the liquid phase, vapor phase, or a mixture of liquid and vapor, flows through discharge lines 24 into reservoirs or holding tanks such as a potable water reservoir 26 and/or a distilled water reservoir 28.

A controller 30 is provided to coordinate flow of the working fluid of solar collector 12 and purification circuit 17. Controller 30 is connected to a first temperature sensor TSA configured to sense the fluid temperature at the outlet of solar collector 12. Controller 30 is also connected to a second temperature sensor TSB configured to sense the fluid temperature at the outlet of heat exchanger 14. Controller 30 may also be connected to a solar fluid pump 32 and a water treatment pump 34. Controller 30 monitors temperature sensor TSA and adjusts the fluid flow rate through the closed loop solar collector 12, keeping the temperature of the solar heated fluid close to, but not at, the stagnation temperature for the solar collector. Stagnation is the point where the fluid passing through the evacuated tubes flashes to vapor. In an exemplary embodiment, water may be used as the working fluid in the solar collector. The water, acting as the working fluid of the solar collector, is maintained at a pressure of approximately 10 bar, wherein stagnation in the CPC evacuated tubes occurs at approximately 130 °C. Controller 30 sends a signal to solar fluid pump 32 to maintain the flow rate of the fluid such that the thermal energy transferred to the fluid is balanced to maintain the fluid just below the stagnation point.

Controller 30 also monitors temperature sensor TSB to adjust the supply of non-potable water through purification circuit 17. Purification circuit 17 starts with an elevated tank 18 filled with locally sourced ground water or river water (non-potable water). Non-potable water is held in tank 18 above ground level at atmospheric pressure. Elevated tank 18 may have a pressurized pipe from a well pump or locally sourced piped water of suspect quality water. The non-potable water is passed through filter 20 to remove impurities and then is pumped by water treatment pump 34 through heat exchanger 14, where the temperature of the water is raised sufficiently to kill any pathogens in the water and discharged directly to potable water reservoir 26 or passed through a condenser 36 to produce distilled water, and then into distilled water reservoir 28. Water in either the potable water reservoir 26 or the distilled water reservoir 28 may be maintained in a safe, disinfected, and potable state through ultra-violet irradiation, chlorine, ozone, or other suitable treatment for storing potable water.

Additionally, the circulation line 16 of solar collector 12 may also include throttling valve 38 in hot leg 16A and a check valve 40 in cold leg 16B. Further circulation line 16 may also include an expansion tank 42. Also, a check valve 44 may be provided in non-potable water supply line 22.

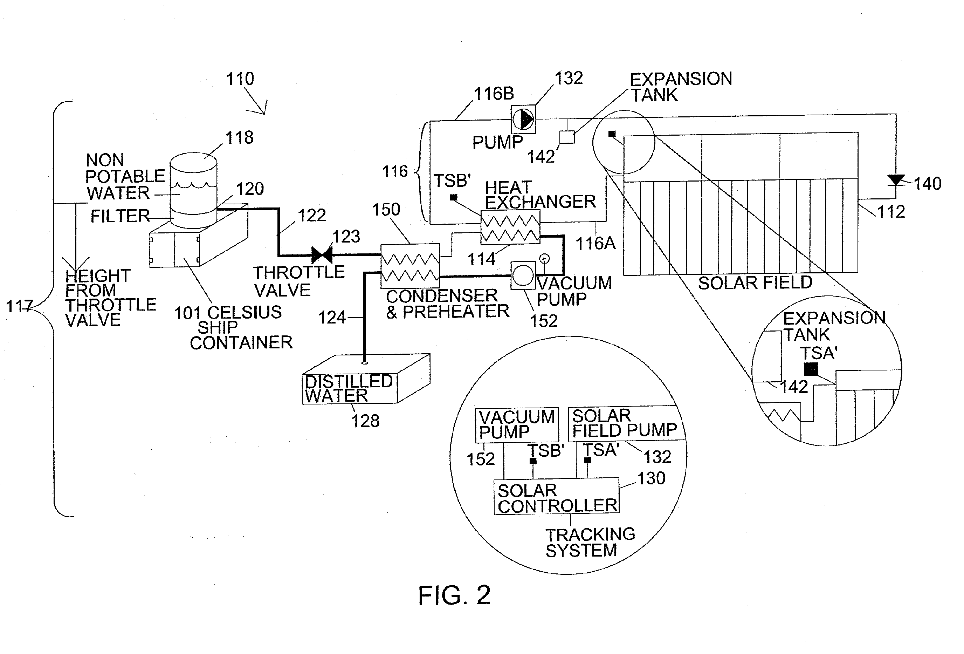

In another embodiment of the present disclosure shown in FIG. 2, a solar energy conversion system 110 includes a solar collector 112, and a heat exchanger 114. Solar collector 112 and heat exchanger 114 are fluidly coupled by a circulation line 116 having a hot leg 116A for transporting a working fluid from solar collector 112 to heat exchanger 114, and a cold leg 116B for returning the working fluid after it has passed through heat exchanger 114.

In the embodiment of the solar energy conversion system 110 shown in FIG. 2, purification circuit 117 includes a tank 118 for holding a source of non-potable water. Tank 118 may include a filter 120, for removing particulates, organic compounds, and other contaminants from the non-potable water as described previously. Non-potable water is supplied by gravity feed through a throttling valve 123 in supply line 122. The non-potable water passes through a condenser/preheater 150 before passing through heat exchanger 114. After passing through heat exchanger 114, the water in purification circuit 117 passes again through condenser/preheater 150 before being discharged through discharge line 124 into distilled water reservoir 128. In this manner, condenser/preheater increases the efficiency of the system by raising the temperature of the non-potable water before it enters heat exchanger 114 and by condensing water vapor in purification circuit 117 into distilled water.

Purification circuit 117 may also include a vacuum pump 152. Vacuum pump provides an environment below atmospheric pressure, allowing the non-potable water to vaporize at a lower temperature than it would otherwise if the system were operated at or above atmospheric pressure. The advantage of the exemplary embodiment of FIG. 2, is that non-potable water may be distilled at temperatures less than 100 °C, thus separating the water from any harmful pathogens at a low temperature, and thus allows the purification circuit to have a larger capacity than if operated at atmospheric pressure.

A controller 130 is provided to coordinate flow of the working fluid of solar collector 112 and purification circuit 117. Controller 130 is connected to a first temperature sensor TSA' configured to sense the fluid temperature at the outlet of solar collector 112. Controller 130 is also connected to a second temperature sensor TSB' configured to sense the fluid temperature at the inlet of heat exchanger 114. Controller 130 may also be connected to a solar fluid pump 132 and vacuum pump 152. Controller 130 monitors temperature sensors TSA' and TSB' to adjust the fluid flow rate through the closed loop solar collector 112, keeping the temperature of the solar heated fluid close to, but not at, the stagnation temperature for the solar collector. Controller 130 sends a signal to solar fluid pump 132 to maintain the flow rate of the fluid such that the thermal energy transferred to the fluid is balanced to maintain the fluid just below the stagnation point. Controller also sends a signal to vacuum pump 152 to adjust the pressure in the purification circuit 117.

In the exemplary embodiment of FIG. 2, the circulation line 116 of solar collector 112 may also include a check valve 140 in cold leg 116B. Further circulation line 116 may also include an expansion tank 142.

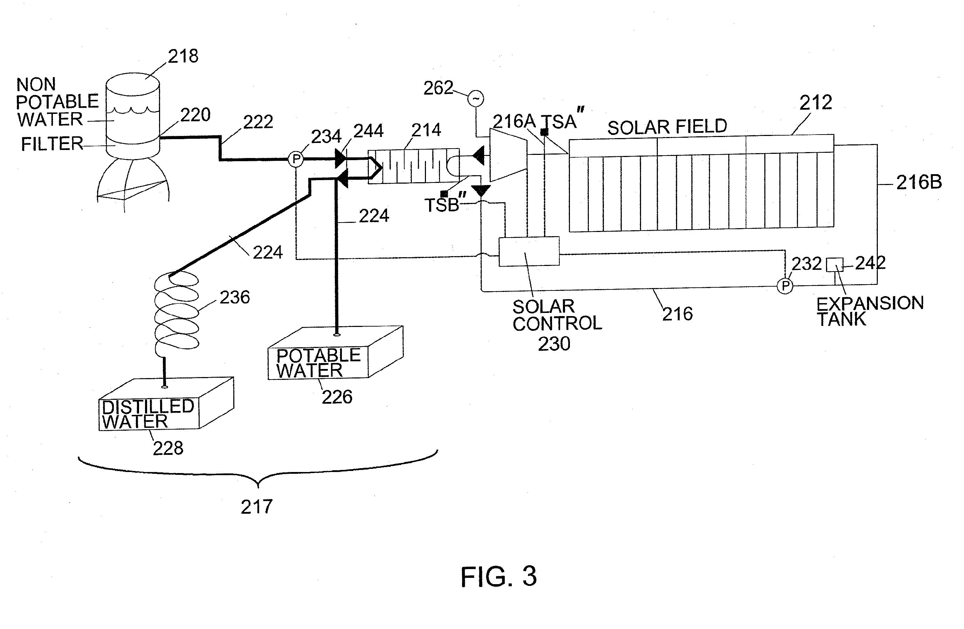

In another exemplary embodiment of the present disclosure, shown in FIG. 3, the solar energy conversion system 210 of the present disclosure may be configured for the production of electrical energy. Solar energy conversion system 210 includes a solar collector 212, and a heat exchanger 214. Solar collector 212 and heat exchanger 214 are fluidly coupled by a circulation line 216 having a hot leg 216A for transporting a working fluid from solar collector 212 to heat exchanger 214, and a cold leg 216B for returning the working fluid after it has passed through heat exchanger 214.

In the exemplary embodiment of FIG. 3, the working fluid from solar collector 212 is passed through a turbine 260 (or a Stirling engine), which is coupled to a generator 262 for the production of electrical power. Turbine 260 is of the type configured to operate on a Rankine power cycle and may use steam or other working fluid such as organic solvents, ammonia, acetone, etc. After passing through turbine 260, the working fluid in the solar collector is passed through heat exchanger 214 where it is condensed and pumped back into solar collector 212 by solar fluid pump 232.

Purification circuit 217 includes a tank 218 for holding a source of non-potable water. Tank 218 may include a filter 220, for removing particulates, organic compounds, and other contaminants from the non-potable water. Non-potable water is supplied to heat exchanger 214 through supply line 222. Water (liquid and/or vapor) discharged from heat exchanger 214 flows through discharge lines 224 into reservoirs or holding tanks such as a potable water reservoir 226 and/or a distilled water reservoir 228 after passing through a condenser 236.

A controller 230 is provided to coordinate flow of the working fluid of solar collector 212 and purification circuit 217. Controller 230 is connected to a first temperature sensor TSA" configured to sense the fluid temperature at the outlet of solar collector 212. Controller 230 is also connected to a second temperature sensor TSB" configured to sense the fluid temperature at the outlet of heat exchanger 214. Controller 230 may also be connected to a solar fluid pump 232 and a water treatment pump 234. Controller 230 monitors temperature sensor TSA" and adjusts the fluid flow rate through the closed loop solar collector 212, keeping the temperature of the solar heated fluid close to, but not at, the stagnation temperature for the solar collector. Controller 230 sends a signal to solar fluid pump 232 to maintain the flow rate of the fluid such that the thermal energy transferred to the fluid is balanced to maintain the fluid just below the stagnation point. Controller 230 also monitors temperature sensor TSB" to adjust the supply of non-potable water through purification circuit 217.

Additionally, the circulation line 216 of solar collector 12 may also include throttling valve (not shown), check valve (not shown), and/or expansion tank 242, as appropriate. Also, a check valve 244 may be provided in non-potable water supply line 222.

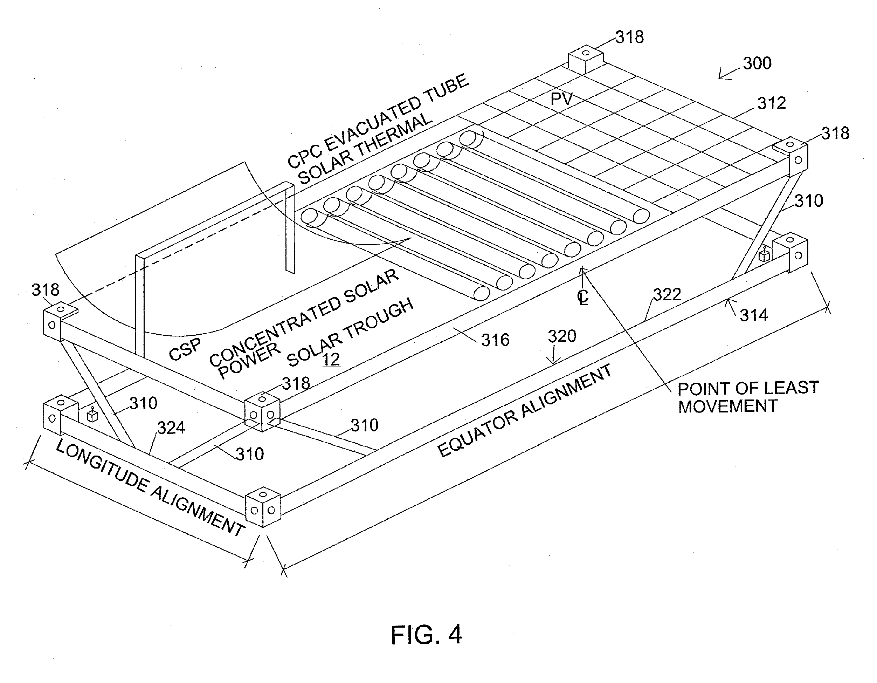

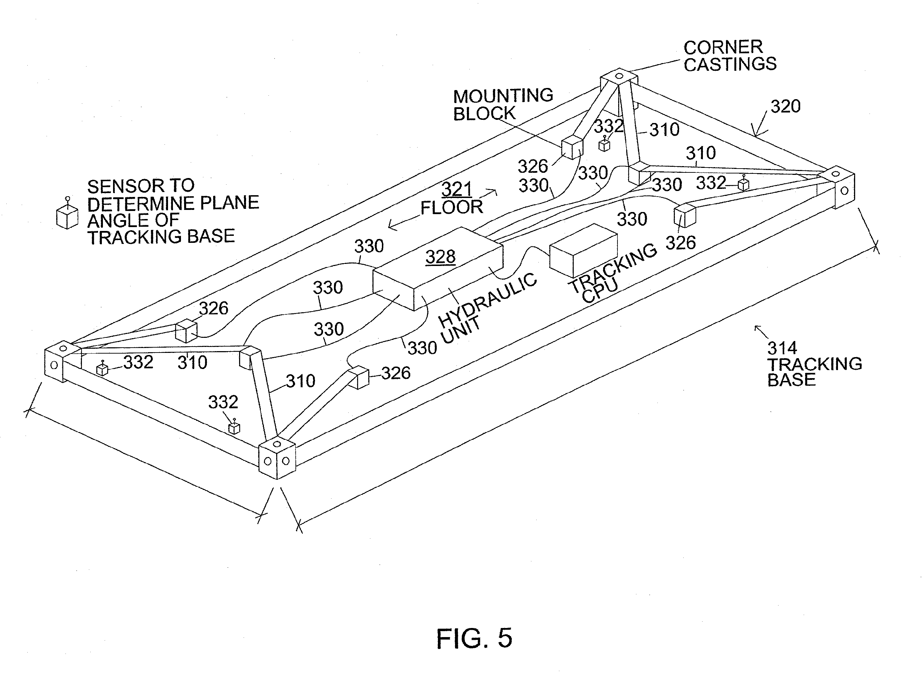

Another aspect of the present disclosure includes a plane angle modifier 300 for solar collector 12, as shown in FIGS. 4 and 5. Solar collector 12 must be properly oriented with respect to the sun to maximize the amount of radiant solar energy absorbed. However, the position of the sun relative to a specific location on Earth changes daily. Further, the relative position of the sun is different for each location and elevation on Earth, therefore the plane angle modifier 300 adjusts the plane angle of solar collector 12 relative to the sun based on location, elevation, date and time. Thus, the system acts as a one dimensional linear tracking device.

Referring now to FIGS. 4 and 5, plane angle modifier 300 includes a solar collector stage 312 configured to receive a solar collector 12, a base 314, and one or more adjustable legs 310 attached to base 314 and solar collector stage 312 configured to adjust the orientation of the plane angle of the solar collector 12. In the embodiment shown in FIG. 4, solar collector 12 is shown as a composite of a CSP trough collector, a CPC evacuated tube collector, and a photovoltaic collector. It should be understood that the solar collector as described herein may be of one or a combination of these types of collectors. Further, the present disclosure should be understood such that other types of solar collectors are not precluded.

Collector stage 312 includes a collector stage frame 316 configured to support solar collector 12 and one or more collector stage leg mounts 318. Base 314 includes a base frame 320 including an equatorial alignment member 322 and a longitudinal alignment member 324. A floor 321 is disposed within base frame 320. When deployed, equatorial alignment member 322 is configured to be oriented towards and substantially parallel with the Earth's equator. Similarly, longitudinal alignment member 324 will be substantially aligned with a meridian line.

Base 314 further includes a number of base leg mounts 326 for coupling legs 310 to base 314. An actuator 328 is provided to adjust legs 310, and thus the orientation of the plane angle of collector stage 312. In the embodiment shown in FIG. 5, actuator 328 is shown as a hydraulic pump configured to supply hydraulic fluid through hydraulic lines 330. The legs of this exemplary embodiment are configured in a plurality of telescoping sections that are expanded and contracted by hydraulic cylinders (not shown). As should be understood, other types of actuators, such as electric servo motors, pneumatic actuators, and others are not excluded from the scope of the present disclosure. Base 314 also may include a number of sensors 332 to determine the orientation of the base 314. It is envisioned that at least three sensors 332 be provided at spaced locations on base 314 to accurately determine orientation, however more or fewer may be used depending on the application.

The plane angle modifier 300 of the present disclosure increases the efficiency of solar collector 12 by adjusting the plane angle of solar collector 12 to maximize solar gain by reducing cardinal point inefficiencies. Cardinal point maximization orients the plane of the solar collector 12, perpendicular to incoming solar radiation rays. Fixed solar systems are maximized two days per year, and generally orient the plane angle based on the latitude of the location on Earth where the system is installed. In the present disclosure, the plane angle modifier adjusts the solar collector 12 plane to maximize solar gain. Plane angle modifier 300 calculates the needed plane angle based on latitude, longitude, elevation, plane angle of the base, date, and local time. Plane angle modifier 300 automatically slowly rotates the collectors as needed: continuously, hourly, daily, weekly, or monthly to "follow" the relative path of the sun.

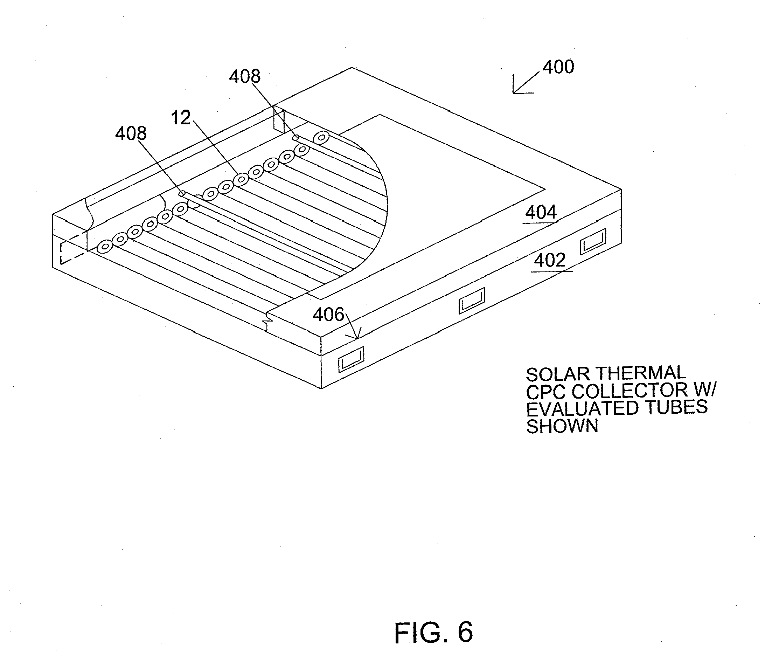

Yet another aspect of the present disclosure is a case 400 or container for the solar energy conversion system 10 of the present disclosure, allowing solar energy conversion system 10 to be mobile and transportable. Referring to FIG. 6, case 400 includes a base 402 and a lid 404 coupled to the base 402 by hinge 406. Base 402 is configured to contain the components of plane angle modifier 300 described above. Lid 404 is configured to contain solar collector 12. Lid 404 also includes one or more telescoping stands 408 for orienting the lid 404 relative to the sun. Stands 408 may be operated manually, or may be automatically actuated, for example, by hydraulic, pneumatic, or electric actuators. The case 400 is the means of transport and installation rack for solar systems. The case 400 allows the safe transit and setup of solar collectors anywhere in the world, allows the inclination angle of the collector system to be modified to maximize the solar gain at any latitude, or any time of year. The inclination angle can be modified as needed, hourly, daily, weekly, or monthly. The case 400 allows the collectors to be connected together to form larger systems. The case and components are self-contained. The collector systems are designed to be attached to the top lid of the case, and connected to other collectors with equipment transported inside the case.

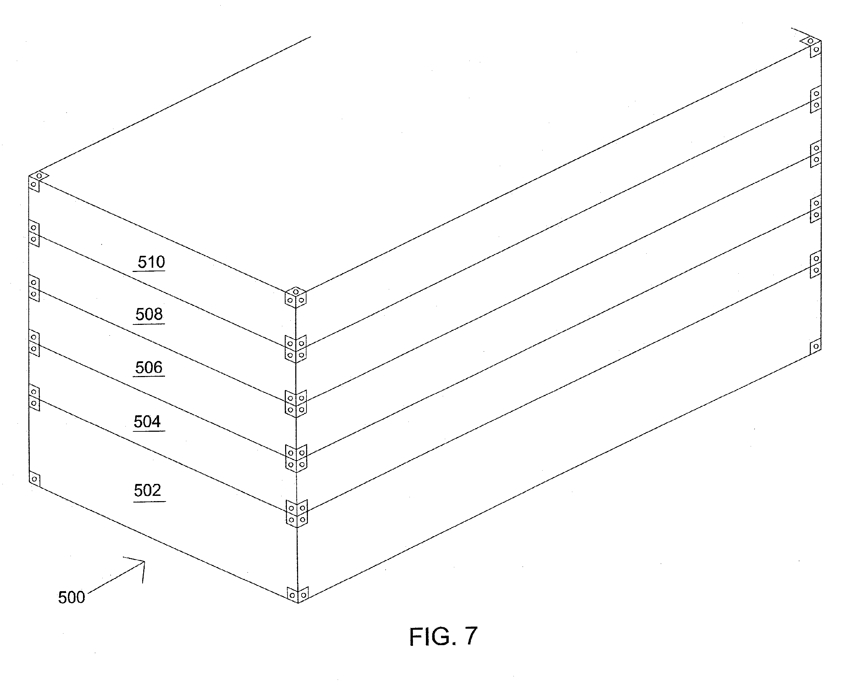

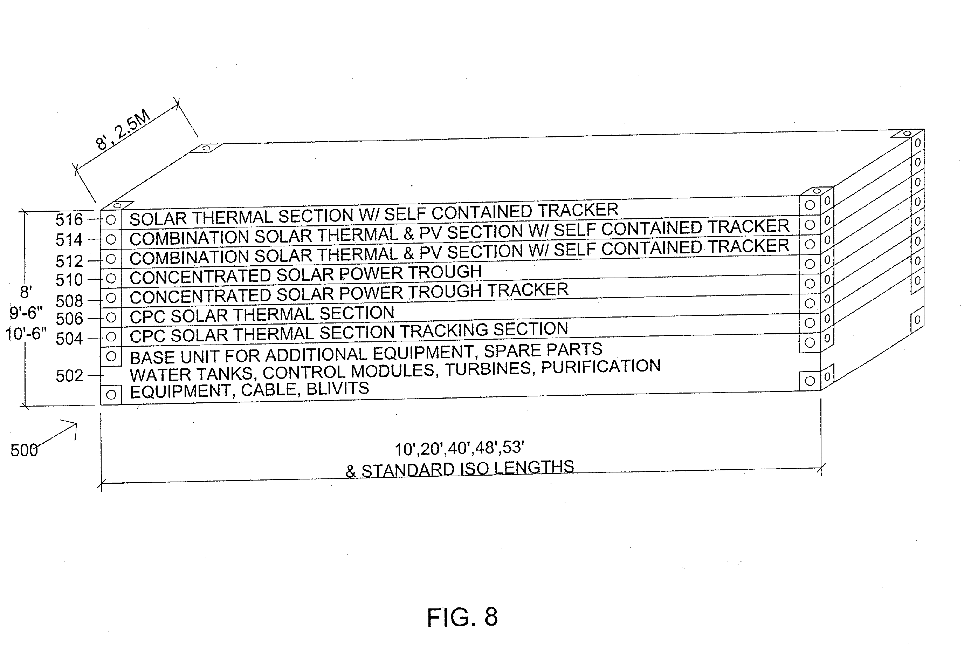

Referring now to FIGS. 7 and 8, a plurality of cases for each of the components of the thermal energy conversion system 10 of the present disclosure, may be coupled together to form a case assembly 500. Case assembly 500 includes a plurality of stackable cases 502, 504, 506, 508, 510 configured for removable coupling allowing for transportation as a unit. Referring now to FIG. 8, case assembly 500 is configured to be of dimensions comparable to a standard intermodal shipping container to facilitate transport. Standard intermodal shipping container generally have lengths of 6 feet 6 inches, 20 feet, 40 feet, 48 feet, or 53 feet; heights of 8 feet, 9 feet 6 inches, or 10 feet 6 inches; and a width of 8 feet.

The exemplary embodiment shown in FIG. 8 includes a base case 502 containing additional equipment, spare parts, water tanks, control modules, turbines, batteries, purification equipment, cable, and other supplies. Stacked on top of case 502 is case 504 containing a CPC solar thermal section and a tracking section. Stacked on top of case 504 is case 506 containing a CPC solar thermal section. Stacked on top of case 506 is case 508 containing a CSP trough section and a tracking section. Stacked on top of case 508 is case 510 containing a CSP trough section. Stacked on top of case 510 is case 512 containing a combination solar thermal and PV section with a self-contained tracker. Stacked on top of case 512 is case 514 containing another combination solar thermal and PV section with a self-contained tracker. Finally, stacked on top of case 514 is case 516 containing a solar thermal and a self-contained tracker.

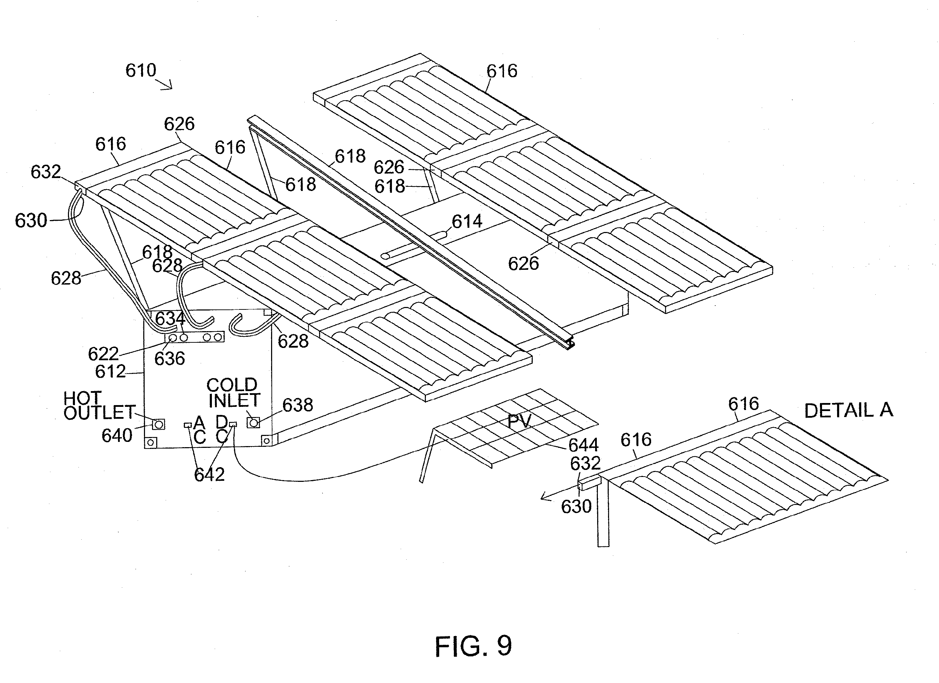

An embodiment of the self-contained solar thermal energy conversion system 610 of the present disclosure includes a case 612 or container for housing the components of the system. The case 612 may be constructed from a standard intermodal shipping unit (ISU) as shown in the exemplary embodiment of FIG. 9. Standard intermodal shipping containers generally have lengths of 20 feet, 40 feet, 48 feet, or 53 feet; heights of 8 feet, 9 feet 6 inches, or 10 feet 6 inches; and a width of 8 feet.

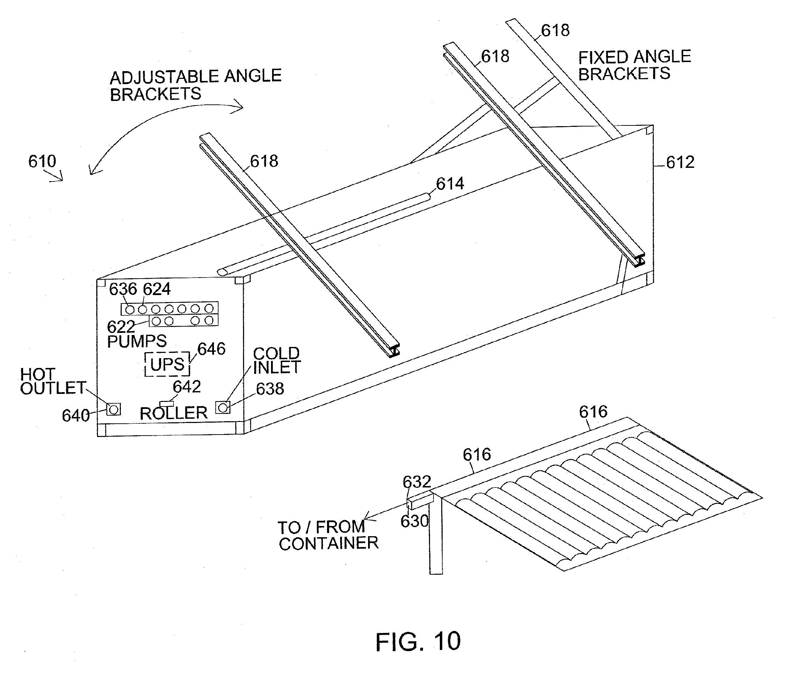

Mounting brackets 614 are provided on the exterior of the case 612 configured for attachment of solar collectors 616 to the case 612 by support members 618. Support members 618 may be configured for attachment to the case 612 at a fixed angle, as shown in FIG. 9, or may be configured for pivotable attachment to the case 612, allowing for the angle of the support members 618 to be adjusted, as shown in FIG. 10. While fixed mounting of solar collectors 616 allows for a simple set up, adjustable mounting allows the angle of the solar collectors 616 to be matched to the elevation of the sun, thereby increasing efficiency. Solar collectors 616 of the present disclosure may consist of evacuated tubes with compound parabolic concentrators (CPC evacuated tubes), and/or concentrated solar power (CSP) parabolic trough collectors.

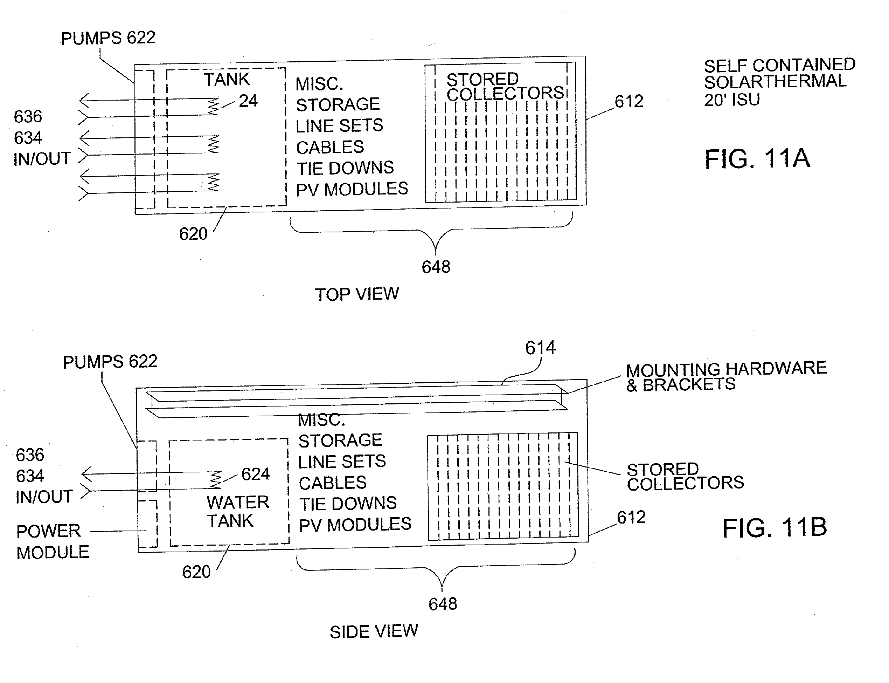

Referring to FIGS. 11A and 11B, housed within the case 612 is an integrated water tank 620. One or more solar fluid pumps 622 are provided in fluid communication with a heat exchanger 624 configured for circulating a working fluid through solar collectors 616 such that the working fluid absorbs solar thermal energy through the solar collector 616 and transfers the solar thermal energy through heat exchanger 624 to the water contained within the water tank 620.

Referring again to FIG. 9, solar collectors 616 may be constructed as a series of modular panels configured to be coupled together to form a collector assembly as shown in Detail A. A coupling 626 is provided to connect modular panels. In the embodiment shown, coupling 626 includes an inlet portion and an outlet portion, allowing fluid to circulate through the modular panels.

Solar collectors 616 are fluidly connected to solar fluid pumps 622 by solar fluid lines 628. In the exemplary embodiment, solar fluid lines 628 are shown as a pair of hoses, with a first hose connecting a solar collector outlet 630 to a solar fluid pump inlet 634 and a second hose connecting a heat exchanger outlet 636 to a solar collector inlet 632. Depending on the application, solar fluid lines 628 may be constructed from rubber hose, polymer hose such as nylon, polyvinylchloride, and the like, or metal braided hose, such as stainless steel.

Water tank 620 includes a cold water inlet 638 and a hot water outlet 640 accessible from outside the case 612. The cold water inlet 638 may receive non-potable water from a holding tank (not shown) for introduction into the water tank 620 wherein the water is heated by transfer of thermal energy through the heat exchanger 624, raising the temperature of the water sufficiently to kill any pathogens that may be present, and thereby producing potable water.

External electrical power connections 642 are provided to allow solar fluid pumps 622 to be operated on an external electrical power source. In the exemplary embodiment of FIG. 9, the case 612 includes electrical power connections 642 for both an alternating current source (AC) and a direct current source (DC). For example, as shown in FIG. 9, a photovoltaic (PV) module 644 may be configured to provide DC power to the solar fluid pumps 622. Additionally, an AC power source, such as a gasoline or diesel fuel powered generator (not shown) may be connected to power the solar fluid pumps 622. Further, as shown in FIG. 10, the solar energy conversion system of the present disclosure may include an uninterruptable power supply (UPS) 646 to provide conditioned and/or backup power to the solar fluid pumps 622. Further, a Stirling engine may be used to supply electrical energy to the system of the present disclosure or to an electrical grid.

Referring to FIGS. 11A and 11B, in addition to housing the integrated water tank 620, the case 612 also includes a storage area 648 configured to receive and hold the solar panels 616 for storage and transportation when the solar thermal conversion system 610 of the present disclosure is not in use. The storage area is also configured to receive and hold accessory equipment used in connection with the solar thermal conversion system such as solar fluid lines 628, photovoltaic module 644, cables, tie-downs, hardware, spare parts, etc.

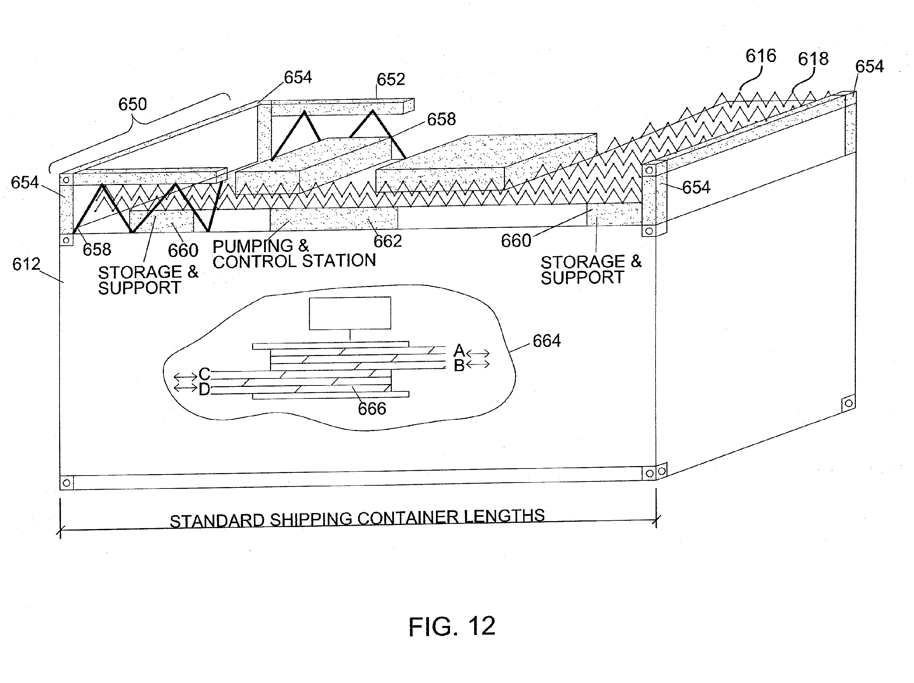

In another embodiment of the present disclosure, as shown in FIG. 12, the top of case 612 may include an external storage area 650 either in lieu of or in addition to storage area 648. In the exemplary embodiment, the external storage area 650 includes a frame 652 disposed about the perimeter of the top of case 612 (shown in a cut-away view). Vertical frame members 654 are provided at the corners and are interconnected by horizontal frame members 656. Cross-members 658 long the sides of frame 652, while the ends of frame 652 remain clear of obstruction. This configuration provides the ability to secure movable items in the external storage area 650 to the case 612 by, for example using nylon straps, cables, etc., fed through and around the movable items and the cross members 658. The open ends of frame 652 allow for removal of items from the external storage area 650. As shown in FIG. 12, solar collectors 616 and solar collector support members 618 may be placed in and removed from the external storage area 650 through the open ends of frame 650.

Also, external storage area 650 may include external storage containers 660 for holding smaller items such as repair parts, cable, rope, fittings and the like. Further, an external pump housing 662 may also be located in the external storage area 650 containing the solar fluid pumps 622 and control system. Placing the storage area and pump housing outside of the case 612 allows more room inside the case for components such as the water tank 620, increasing the capacity of the unit. In the exemplary embodiment of FIG. 12, the frame 652 of external storage area 650 increases the height of a standard shipping container approximately two feet, from 8 feet six inches to ten feet six inches. However, it should be apparent that the size of the external storage area 650 may be adjusted depending on a particular application.

The solar thermal energy conversion system 610 of the present disclosure may also include a solar collector adjustment system 664 for orienting the solar collectors 616 relative to the sun. In the exemplary embodiment shown in FIGS. 4 and 5, the solar collector adjustment system includes a drum 666 cables A, B, C, and D disposed about the drum, and a motor 668 to rotate the drum. In the exemplary embodiment, cables A, B, C, and D are disposed about drum 666 and coupled to solar collector support members 618. Cables A and B are exit the case 612 at the lower end of sidewall 670, and are connected to the solar collector 616 at its southwest (cable A) and southeast (cable B) corners, respectively. Likewise, cables C and D exit the case 12 at the lower end of sidewall 672, and are connected to the solar collector at its northwest (cable C) and northeast (cable D) corners, respectively. Cables A, B, C, and D are disposed about drum 666 such that as cables A and B retract, cables C and D pay out, and vice versa. Solar collector 616 is pivotally mounted at a hinge 674, located at one top side of either the case 612 or frame 652. In this way, solar collector may be pivotally adjusted to optimize its angle relative to the sun. The system of the present disclosure may further include a controller to automatically pivotally adjust the position of the solar collector 16 to follow the relative movement of the sun in the sky. Also, cables A, B, C, and D may tensioned by a pulley system (not shown) to keep the cables aligned and to reduce wear.

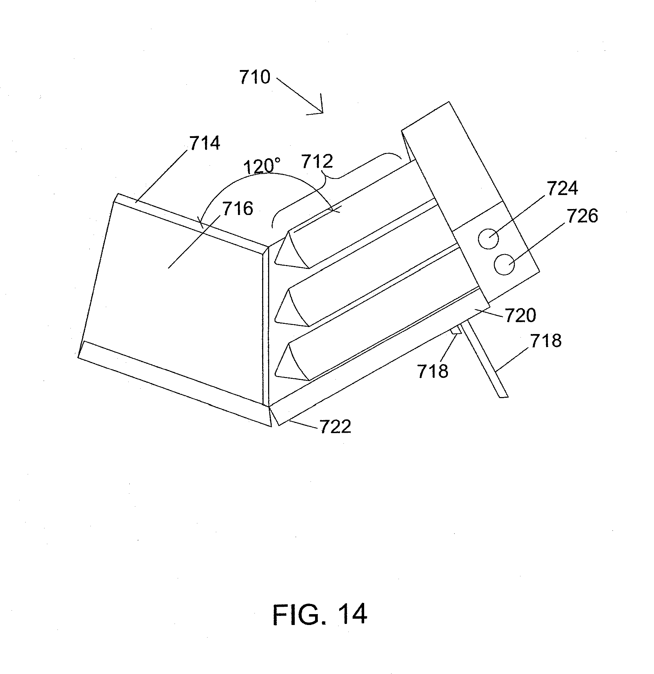

Referring to FIG 14, another embodiment of the present disclosure includes a portable collector module 710 including a solar collector 712 and a protective cover 714. The inner surface of protective cover includes a reflective surface 716 configured to reflect solar energy onto the solar collector 712 when the collector module 710 is in a deployed state. The protective cover 714 is configured to open to an angle between 45 degrees and 120 degrees relative to the solar collector 712.

Collector module 710 may also include a plane angle modifier 718 positioned at one end 720 of the solar collector 712. The plane angle modifier is configured to adjust the angle of the solar collector 712 relative to the solar elevation angle to optimize the amount of solar energy striking the solar collector 712. In the embodiment shown in FIG. 14, the plane angle modifier 718 is constructed from a telescoping rod, however a scissors jack or other suitable methods of adjusting the angle of the solar collector 712 are equally acceptable. Additionally, although not shown, a plane angle modifier may also be positioned at the opposite end 722 of the solar collector 712. This configuration allows end 722 of the solar collector 712 to be oriented at an angle below horizontal. The plane angle modifier 718 function as an optimal angel modifier.

Collector module also includes an inlet port 724 and an outlet port 726 configured to connect to flexible hoses allowing for circulation of a working fluid, such as water, to be heated by the solar collector 712.

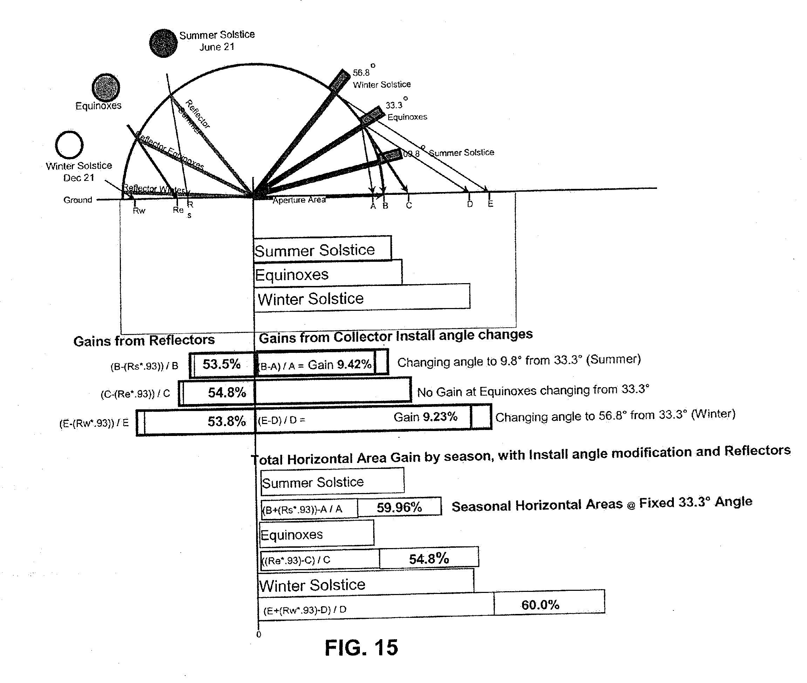

The worldwide average daylight solar radiation level is 398 W/m2. Concentration and optimal angles increase solar energy in kWh/m² available and the collector's efficiency. Active tracking systems and concentration are two ways to improve the kWh/m² available to a solar system. Tracking systems maximize both the hours insolation strikes the collector's aperture area and maximizes the relative aperture area to incoming direct sunlight. Referring to FIG. 15, concentration increases the Watts per square meter of direct and indirect solar radiation striking the collector's aperture area. Concentration has the added effect of improving the Collector's efficiency. The system of the present disclosure uses both methods to increase the system's yields, providing as much energy as adding an additional container of fixed angle collectors.

On fixed angle solar systems the aperture area is maximized for 4-5 hours, two days per year. If the collector angle were changed once per month, the system would be maximized twelve times per year and 52 times per year if changed weekly, etc. Changing the installed angle monthly allows the collectors to receive additional solar radiation from sunrise to sunset that would otherwise go uncollected as the sun rises and sets north of east-west during the summer months.

Referring to FIG. 15, the gains in insolation upon the solar collector are a function of aperture area and collector angle wherein:

| POINT | COLLECTOR ANGLE | SEASON |
|---|---|---|
| A | 33.3 Angle | Summer |
| B | 09.8 Angle | Summer |
| C | 33.3 Angle | Equinoxes |
| D | 33.3 Angle | Winter |
| E | 56.8 Angle | Winter |
| Rw | Reflector Area | Winter |
| Re | Reflector Area | Equinoxes |
| Rs | Reflector Area | Summer |

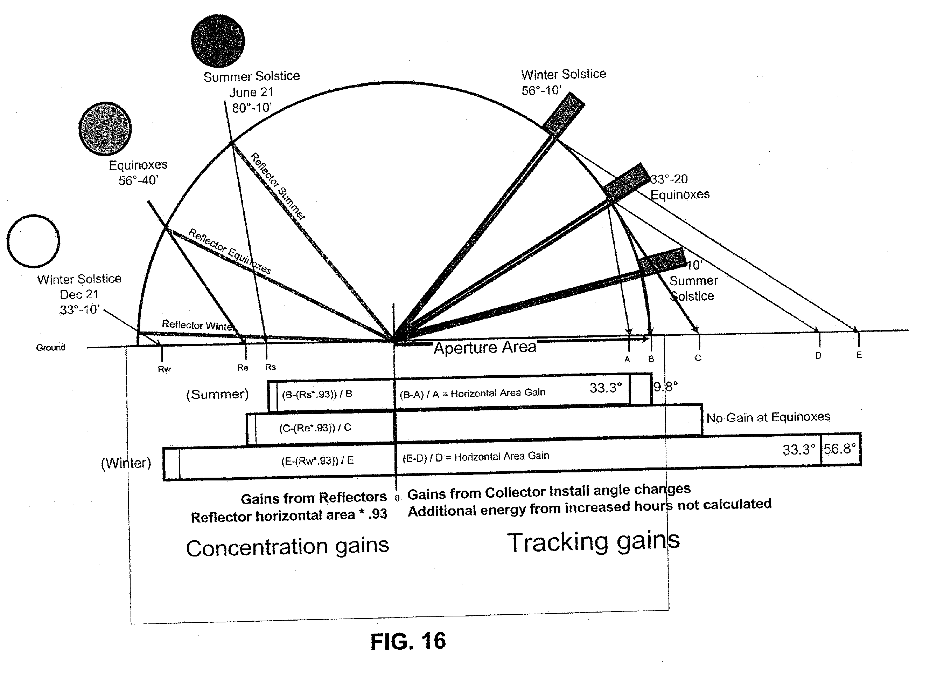

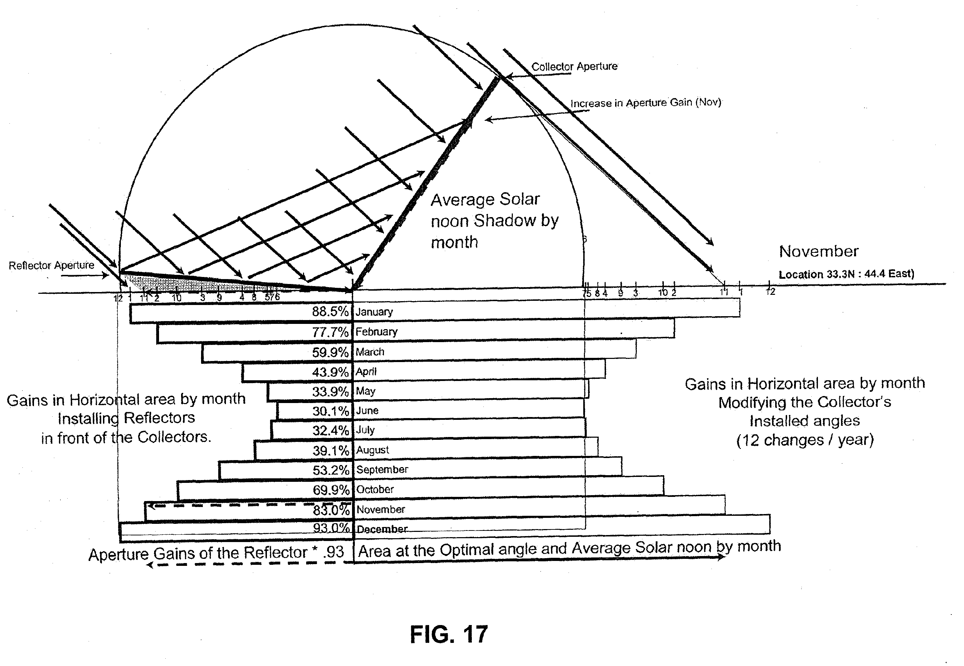

This embodiment of the present disclosure is capable of actively tracking the sun by changing the optimal angle once per month. The system may be configured for manual or automatic adjustment. Changing the optimal angle throughout the day was found to increase kWh/m2 by 37% yearly over a fixed angle system. Insolation gains for one example of the exemplary embodiment are shown in FIGS. 16 and 17.

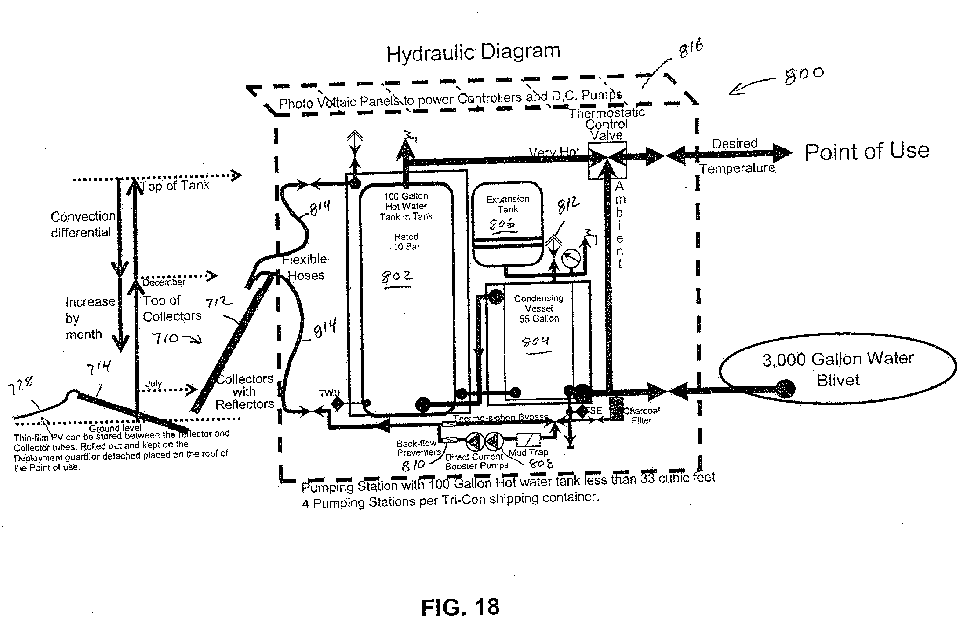

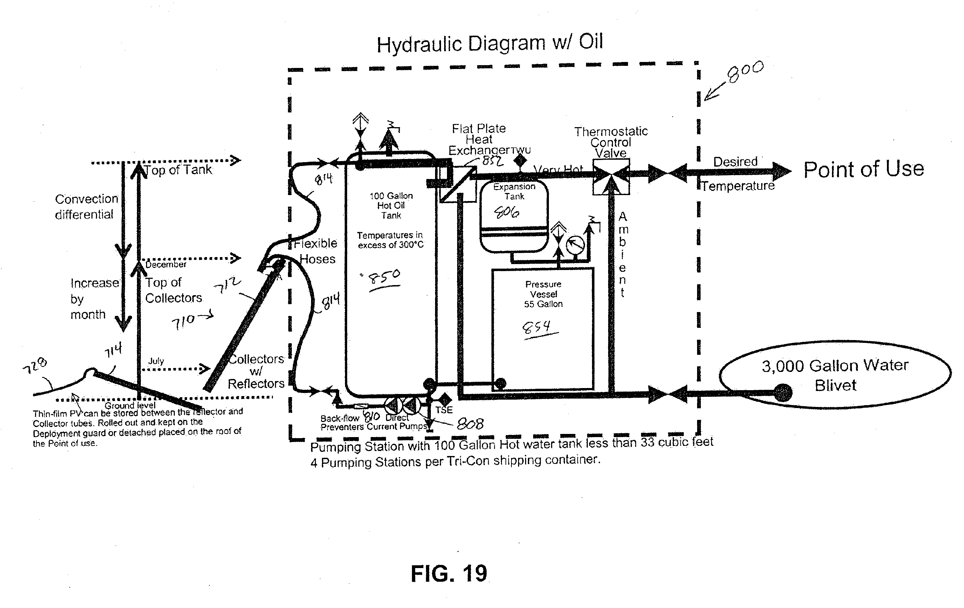

The protective cover allows collector modules to be stacked into a container and protects the solar collector during shipping and setup. The protective cover may be camouflaged on the outside, for military applications, while the inside face has a mirrored reflective surface to concentrate additional solar radiation into the solar collectors. The deployment guards open 120 degrees away from the face of the collectors and reflects light into the face of the evacuated tube collectors, after derating for inefficiencies the reflector reflects 30.1 - 93% more solar radiation into the solar collectors. Thin film photovoltaic (PV) panels are able to fit between the protective cover's reflector and the solar collector. During storage, the face of the PV panel is against the reflector, protecting both. The PV (728 shown schematically in FIGS. 18 and 19) panel may then be deployed when the collector module is in use to provide direct current electrical power for auxiliary systems. A secondary reflector may be added into this space, when the collectors are placed into one row, or when the distance between rows is sufficiently large enough to prevent shading the northern rows in the winter.

Referring to FIG. 18, collector modules 710 may be hydraulically coupled to one or more pumping stations 800 by flexible hoses 814. Each pumping station includes a storage tank 802, a condensing tank 804, expansion tank 806, pumps 808, back flow preventers 810, relief valves 812, de-aerators, and all necessary man portable components to deploy the solar system. The pumping station is primarily powered by a thermosiphon process. The difference in height between the top of the solar collectors and the top of the water tank starts the thermo-siphoning process, moving heat to the storage tank without electrical pumps. The solar collectors are able to heat water with or without electrical pumps based upon the energy demand and energy profile of a particular application. The DC pumps 808 boost pressure in the system during times of heavy hot water usage, and after sunset to flush stored heat inside the solar collectors.

Photovoltaic panels 816 are placed on one side (preferably the top or the southern side) of the pumping station to charge batteries for the solar system's computer, controllers and direct current pumps. Field control of the pumps is achieved by temperature sensing and the energy demand profile of the particular application. During times of high water usage, when the field becomes hotter than the storage element, the pumps start and move thermal energy into the storage tank. Pressure-limiting relief valves are mounted to the pumps to prevent damage should something block or restrict flow, which also triggers an alarm for the user.

In another embodiment of the present disclosure, shown in FIG. 19, pumping station 800 may include oil as the working fluid passed through the solar collectors 712. In this embodiment, an oil tank 850 transfers energy received from the solar collectors 712 through a heat exchanger 852 to water in a pressure vessel 854.

Providing a self-contained mobile solar energy conversion system allows such a system to be transported to remote locations to provide potable water and electrical power without the need for an additional fuel supply. Such a mobile solar system is particularly useful in applications such as disaster relief efforts where power has been knocked out and potable water supplies have been compromised. Such systems may also be transported to remote populations in developing countries where reliable sources of potable water and electricity do not presently exist.

An advantage to using the system of the present disclosure to distill water is that the output of the turbine or engine is controlled by the production of distilled water. The electrical output curve is flattened and a flat output curve is better able to offset fossil fueled electrical generators in small and large grids. The distillation units can be substituted with environmental control units or adsorption chillers with the same effect on the electrical output curve, driving generators offline and providing air conditioning during the peak of the daily solar cycle.

The foregoing disclosure is considered as illustrative only of the principles of the claimed invention. Further, since numerous modifications and changes will readily occur to those skilled in the art, it is not desired that the present disclosure limit the claimed invention to the exact construction and operation shown and described, and accordingly, all suitable modifications and equivalents may be resorted to, falling within the scope of the claimed invention.

## Claims

1. A solar energy conversion system comprising
a collector module including
a solar collector;
a protective cover having a closed position and an open position, a surface of the protective cover adjacent to the solar collector including a reflective surface configured to reflect solar radiation at the solar collector when the protective cover in the open position; and
a plane angle modifier configured to allow adjustment of the solar collector relative to the sun.

2. The solar energy conversion system of claim 1, wherein the protective cover is configured to be positioned at an angle between about 45 degrees and about 120 degrees relative to the solar collector when in the open position, preferably at an angle of about 120 degrees with respect to the solar collector when in the open position.

3. The solar energy conversion system of any of claims 1 or 2, wherein the solar collector comprises a combination compound parabolic concentrator evacuated tube collector or a concentrated solar power parabolic trough collector.

4. The solar energy conversion system of any of claims 1-3, wherein the plane angle modifier is a telescoping rod or a scissors jack.

5. The solar energy conversion system of any of claims 1-4 further comprising a pumping station hydraulically coupled to the collector module.

6. The solar energy conversion system of claim 5, wherein the pumping station is hydraulically coupled to an outlet of the solar collector.

7. The solar energy conversion system of claim 6, wherein the outlet of the solar collector is hydraulically coupled to a hot water tank located inside the pumping station, the hot water tank configured to deliver water for a predetermined application.

8. The solar energy conversion system of any of claims 5-7, wherein the pumping station is configured for connection to a water supply.

9. The solar energy conversion system of claim 8, wherein the pumping station further includes a pump having an inlet hydraulically coupled to the water supply and an outlet hydraulically coupled to an inlet of the solar collector.

10. The solar energy conversion system of any of claims 5-9, wherein the solar collector includes oil as a working fluid, and wherein the pumping station includes
an oil tank hydraulically coupled to an outlet of the solar ,
a water tank hydraulically coupled to a water supply; and
a heat exchanger between the oil tank and the water tank configured to transfer heat energy from the oil to the water.

11. The solar energy conversion system of any of claims 1₋10, wherein the protective cover further includes a thin film photovoltaic panel configured to be disposed between the reflective surface and the solar collector when the protective cover in the closed position.

12. The solar energy conversion system of any of claims 1-11, wherein when the protective cover is in an open position, the plane angle modifier automatically adjusts an angle of the solar collector relative to the sun based on at least one of location, elevation, date, and time.

13. The solar energy conversion system of claim 12, wherein the plane angle modifier automatically adjusts the angle of the collector on a continuous, hourly, daily, weekly, or monthly basis.

14. A method of increasing energy output of a solar collector module, the method comprising the steps of:
providing a collector module including a solar collector, a protective cover having a surface adjacent to the solar collector and including a reflective surface configured to reflect solar radiation at the solar collector, and a plane angle modifier configured to allow adjustment of the solar collector relative to the sun;
optimizing an aperture area of the solar collector based on a location and time of day; and
increasing an amount of solar radiation that is reflected and absorbed into the aperture area of the solar collector.
